# FASCICULE DE BREVET EUROPEEN

(11) **EP 1 477 366 B1**
(45) Date de publication et mention de la délivrance du brevet: **03.08.2005**
(21) Numéro de dépôt: 04291246.9
(22) Date de dépôt: 14.05.2004
(51) Int. Cl.: B60R 13/01, B60R 13/02, E05D 1/02

(54) **Paroi comprenant deux éléments articules et véhicule automobile correspondant**
Wand mit zwei beweglich verbundenen Elementen und Fahrzeug mit einer derartigen Wand
Wall structure comprising two articulated elements and vehicle having such a wall structure

(30) Priorité: 15.05.2003 FR 0305841
(43) Date de publication de la demande: 17.11.2004
(73) Titulaire: Faurecia Automotive Industrie, 92000 Nanterre (FR)
(72) Inventeur: Marcq, Philippe, c/o Faurecia Automotive Industrie, 08210 Mouzon (FR)
(74) Mandataire: Domenego, Bertrand

(56) Documents cités:
- DE-U- 20 120 819

## Description

La présente invention concerne une paroi pour un véhicule automobile, du type comprenant un premier élément et un deuxième élément dont des bords sont adjacents, le deuxième élément étant articulé par rapport au premier élément le long de leurs bords adjacents pour être mobile entre une position abaissée et une position relevée.

L'invention s'applique, par exemple, à un plancher de coffre arrière de véhicule automobile.

WO-00/35 713 décrit un plancher de coffre du type précité. Le deuxième élément de ce plancher est un panneau qui permet d'accéder, lorsqu'il est en position relevée, à un logement de réception d'une roue de secours. Le deuxième panneau est articulé grâce à des charnières métalliques au reste du plancher qui constitue le premier élément. Le premier élément forme donc également un panneau.

Ces charnières métalliques forment une articulation suffisamment solide pour que le deuxième panneau puisse supporter des charges lorsqu'il est en position abaissée. Toutefois, elles conduisent à un coût et à une masse élevés et diminuent les possibilités de recyclage du plancher.

On connaît également des planchers du type précité qui, pour pallier ces inconvénients, utilisent un revêtement textile recouvrant le premier et le deuxième panneaux pour remplir la fonction d'articulation à la place des charnières.

Toutefois, si l'on pose une charge sur le deuxième panneau, il se forme une marche entre les deux panneaux, de sorte que le plancher ne peut pas assurer de manière satisfaisante un rôle de support.

DE 201 20 819 U décrit une paroi selon le préambule de la revendication 1.

Un but de l'invention est de résoudre ce problème en fournissant une paroi du type précité qui puisse supporter de manière satisfaisante des charges tout en restant de coût et de masse réduits.

A cet effet, l'invention a pour objet une paroi du type defini au préambule de la revendication 1, caractérisée en ce que les bords adjacents se chevauchent avec les saillies d'un élément qui passent dans les creux de l'autre élément pour être disposés sous l'autre élément.

Selon des modes particuliers de réalisation, la paroi peut comprendre l'une ou plusieurs des caractéristiques suivantes, prise(s) isolément ou selon toutes les combinaisons techniquement possibles :
- les éléments sont réalisés en matière plastique,
- les saillies sont venues de matière avec les éléments,
- les éléments sont des panneaux et la paroi offre une surface supérieure sensiblement plane lorsque le deuxième panneau est en position abaissée,
- la paroi comprend un revêtement recouvrant les éléments et fixé à ceux-ci pour former une articulation le long des bords adjacents, et
- les saillies d'au moins un bord comprennent des décrochements vers le bas.

L'invention a également pour objet un véhicule automobile comprenant une paroi, caractérisé en ce que la paroi est une paroi telle que définie ci-dessus.

Selon des modes particuliers de réalisation, le véhicule peut comprendre l'une ou plusieurs des caractéristiques suivantes, prise(s) isolément ou selon toutes les combinaisons techniquement possibles :
- la paroi délimite en partie un compartiment de chargement,
- la paroi est un plancher du compartiment, et
- le compartiment de chargement est disposé à l'extrémité arrière du véhicule automobile.

L'invention sera mieux comprise à la lecture de la description qui va suivre, donnée uniquement à titre d'exemple, et faite en se référant aux dessins annexés, sur lesquels :
- la figure 1 est une vue partielle, schématique et en perspective de l'extrémité arrière d'un véhicule automobile selon l'invention, le second panneau du plancher du coffre arrière étant en position abaissée,
- la figure 2 est une vue partielle, schématique, agrandie et de dessous, illustrant les bords adjacents des deux panneaux du plancher du coffre du véhicule de la figure 1, et
- la figure 3 est une vue analogue à la figure 1, illustrant le second panneau du plancher en position relevée.

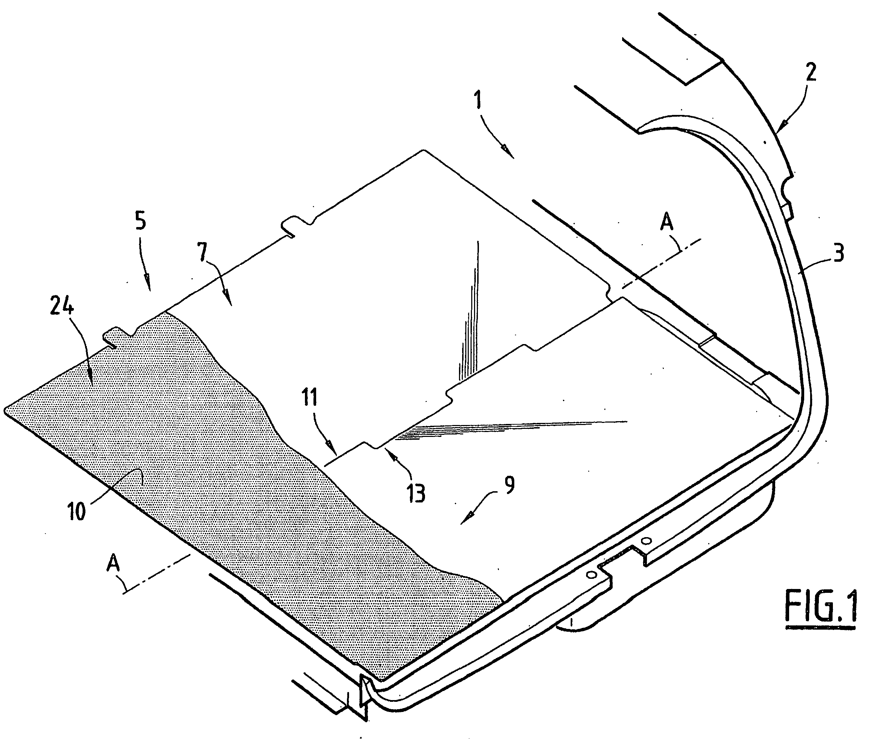

Sur la figure 1, on distingue le coffre 1 de l'extrémité arrière 2 d'un véhicule automobile. Le coffre 1 est délimité en partie par les ailes latérales 3 de la caisse, dont l'une est visible sur la figure 1, et par un plancher inférieur 5.

De manière classique, ce coffre 1 peut servir par exemple au chargement de bagages.

Le plancher 5 comprend un premier panneau fixe 7 et un second panneau 9 articulé au premier panneau 7, comme cela sera décrit par la suite.

Les panneaux 7 et 9 sont réalisés par exemple en matière plastique. Ils comprennent par exemple chacun deux plaques thermoformées superposées et fixées l'une à l'autre.

Les panneaux 7 et 9 sont recouverts par un revêtement 10, par exemple textile, qui a été partiellement arraché sur la figure 1. Ce revêtement 10 est fixé aux surfaces supérieures des panneaux 7 et 9.

Comme illustré par la figure 1, le premier panneau 7 est disposé en avant du second panneau 9 et le bord arrière 11 du premier panneau 7 est adjacent au bord avant 13 du second panneau 9.

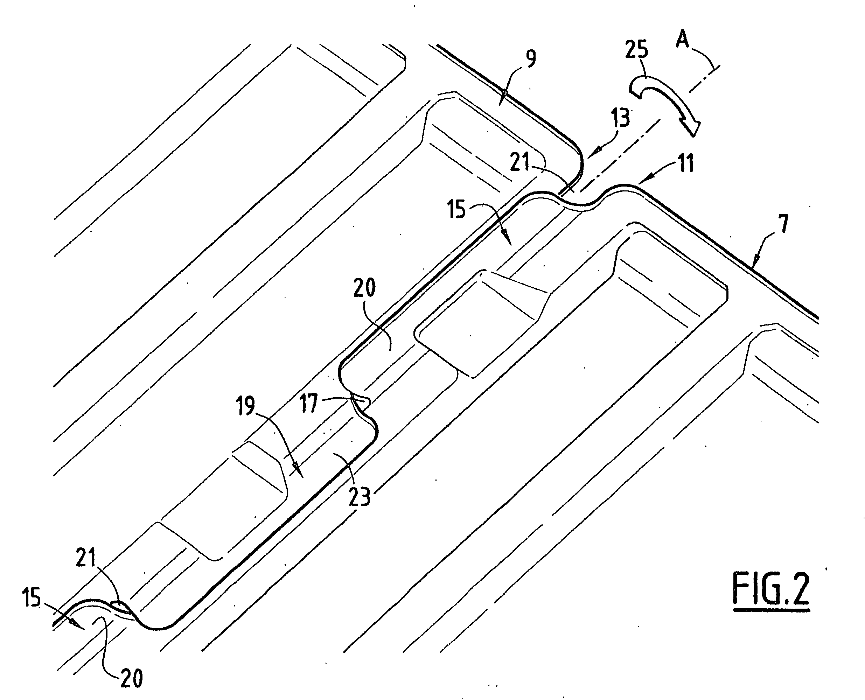

Comme illustré par la figure 2, les bords adjacents 11 et 13 ont des formes crénelées.

Ainsi, le bord arrière 11 du panneau 7 comporte successivement sur sa longueur des saillies 15 et des creux 17 alternés.

De même, le bord avant 13 du panneau 9 comporte successivement sur sa longueur des saillies 19 et des creux 21 alternés.

Les saillies 15 et 19 sont respectivement venues de matière avec les panneaux 7 et 9. Les saillies 15 et les saillies 19 sont terminées respectivement par des légers décrochements 20 et 23 qui sont décalés vers le bas par rapport à leur panneau respectif d'une hauteur sensiblement égale à l'épaisseur des panneaux 7 et 9.

Les saillies 15 du panneau 7 sont engagées dans les creux 21 du bord 13 pour que les décrochements 20 soient disposés sous le panneau 9. De même, les saillies 19 du bord 13 sont engagées dans les creux 17 du bord 11 pour que les décrochements 23 soient disposés sous le panneau 7.

Ainsi, les bords 11 et 13 se chevauchent mutuellement sur toute leur longueur.

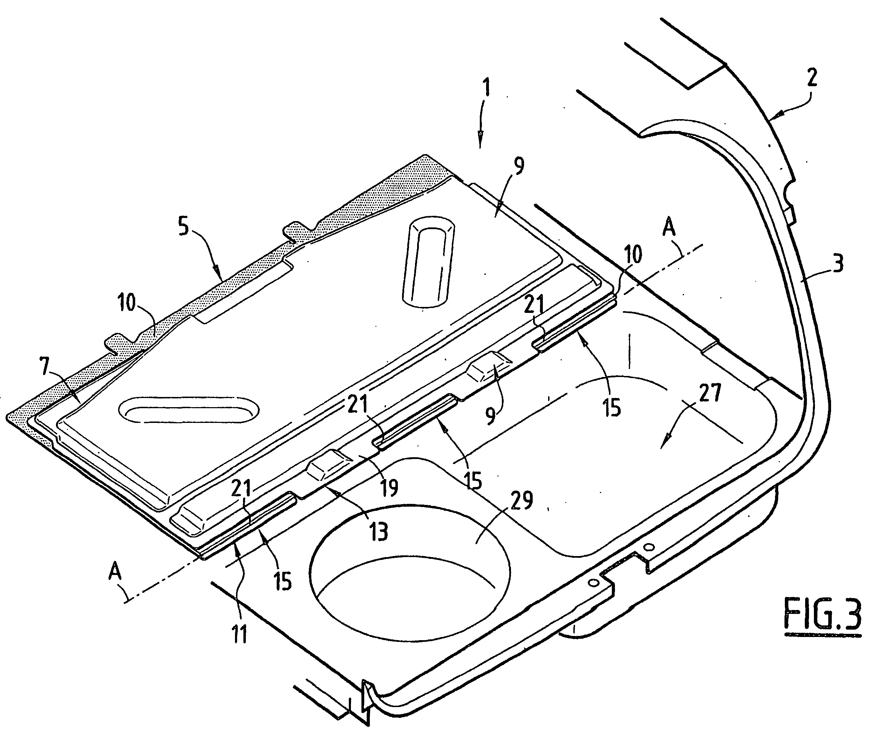

Les bords 11 et 13 engagés mutuellement et le revêtement 10 forment une articulation de sorte que le second panneau 9 est pivotant par rapport au premier panneau 7 autour d'un axe A entre une position abaissée illustrée par les figures 1 et 2, et une position relevée illustrée par la figure 3.

Dans la position abaissée, le second panneau 9 est dans le prolongement du premier panneau 7 de sorte que le plancher 5 offre une surface supérieure 24 sensiblement plane.

Dans la position relevée, le second panneau 9 a pivoté vers l'avant par rapport au premier panneau 7, comme matérialisé par la flèche 25 sur la figure 2.

Le second panneau 9 est alors rabattu au-dessus du premier panneau 7 et libère l'accès à un logement 27 qui est disposé sous le coffre 1 et qui présente par exemple une cavité 29 de réception d'une roue de secours.

On notera qu'au cours du déplacement vers la position relevée, les saillies 15 et 19 ne s'opposent pas au pivotement du second panneau 9 par rapport au premier panneau 7.

C'est également le cas lorsque l'on ramène le second panneau 9 de sa position relevée vers sa position abaissée dans laquelle le second panneau 9 obture le logement 27 disposé sous le plancher 5.

En revanche, les saillies 15 et 19 s'opposent à un pivotement du second panneau 9 par rapport au premier panneau 7 au-delà de sa position abaissée.

Ainsi, lorsqu'une charge est posée sur le second panneau 9 placé en position abaissée, les saillies 15 et 19 permettent de renvoyer les efforts du second panneau 9 vers le premier panneau 7. Le plancher 5 offre alors une solidité satisfaisante et les risques d'apparition sous charge d'une marche entre les panneaux 7 et 9 sont réduits.

Ainsi, le plancher 5 peut remplir de manière satisfaisante un rôle de support.

En outre, du fait de l'absence de charnière métallique, le plancher 5 a un coût et une masse réduits et les possibilités de recyclage du panneau 5 sont élevées.

Les principes décrits précédemment peuvent s'appliquer à la réalisation de parois autre que des planchers. Il peut s'agir par exemple d'une tablette supérieure de masquage du chargement du coffre 1.

Plus généralement, la paroi considérée peut être utilisée dans d'autres emplacements d'un véhicule automobile que des compartiments de chargement.

De même, les principes ci-dessus ne sont pas limités à des panneaux mais peuvent être plus généralement appliqués à des éléments articulés l'un à l'autre, le deuxième élément pouvant pivoter de sa position abaissée vers sa position relevée mais renvoyant les efforts vers le premier élément lorsqu'il est en position abaissée et sous charge.

Une paroi utilisant ces principes peut comprendre plus de deux éléments.

## Revendications

1. Paroi (5) pour un véhicule automobile, du type comprenant un premier élément (7) et un deuxième élément (9) dont des bords (11, 13) sont adjacents, le deuxième élément (9) étant articulé par rapport au premier élément (7) le long de leurs bords adjacents pour être mobile entre une position abaissée et une position relevée,
les bords adjacents (11, 13) ayant des formes crénelées avec des saillies (15, 19) et des creux (17, 21) successifs, **caractérisée en ce que** les bords adjacents (11, 13) se chevauchent avec les saillies d'un élément qui passent dans les creux de l'autre élément pour être disposés sous l'autre élément.

2. Paroi selon la revendication 1, **caractérisée en ce que** les éléments sont réalisés en matière plastique.

3. Paroi selon la revendication 1 ou 2, **caractérisée en ce que** les saillies (15, 19) sont venues de matière avec les éléments.

4. Paroi selon l'une des revendications précédentes, **caractérisée en ce que** les éléments (7, 9) sont des panneaux et **en ce que** la paroi offre une surface supérieure (24) sensiblement plane lorsque le deuxième panneau (9) est en position abaissée.

5. Paroi selon l'une des revendications précédentes, **caractérisée en ce qu'**elle comprend un revêtement (10) recouvrant les éléments (7, 9) et fixé à ceux-ci pour former une articulation le long des bords adjacents (11, 13).

6. Paroi selon l'une des revendications précédentes, **caractérisée en ce que** les saillies (15) d'au moins un bord (11, 13) comprennent des décrochements (23) vers le bas.

7. Véhicule automobile comprenant une paroi (5), **caractérisé en ce que** la paroi est une paroi selon l'une des revendications précédentes.

8. Véhicule selon la revendication 7, **caractérisé en ce que** la paroi (5) délimite en partie un compartiment de chargement.

9. Véhicule selon la revendication 8, **caractérisé en ce que** la paroi (5) est un plancher du compartiment (7).

10. Véhicule selon la revendication 8 ou 9, **caractérisé en ce que** le compartiment de chargement est disposé à l'extrémité arrière (2) du véhicule automobile.

## Patentansprüche

1. Wand (5) für ein Kraftfahrzeug des Typs, der ein erstes Element (7) und ein zweites Element (9) umfasst, deren Ränder (11, 13) nebeneinander liegen, wobei das zweite Element (9) an das erste Element (7) entlang ihrer nebeneinander liegenden Ränder angelenkt ist, um zwischen einer abgesenkten Stellung und einer angehobenen Stellung bewegt werden zu können, wobei die nebeneinander liegenden Ränder (11, 13) eine gezackte Form mit aufeinander folgenden Vorsprüngen (15, 19) und Vertiefungen (17, 21) aufweisen, **dadurch gekennzeichnet, dass** die nebeneinander liegenden Ränder (11, 13) sich überlappen, indem die Vorsprünge des einen Elements in die Vertiefungen des anderen Elements eintreten, um unter dem anderen Element angeordnet zu werden.

2. Wand nach Anspruch 1, **dadurch gekennzeichnet, dass** die Elemente in Kunststoffmaterial ausgeführt sind.

3. Wand nach Anspruch 1 oder 2, **dadurch gekennzeichnet, dass** die Vorsprünge (15, 19) an die Elemente angeformt sind.

4. Wand nach einem der vorhergehenden Ansprüche, **dadurch gekennzeichnet, dass** die Elemente (7, 9) Platten sind und dass die Wand eine Oberseite (24) besitzt, die im Wesentlichen flach ist, wenn die zweite Platte (9) sich in der abgesenkten Stellung befindet.

5. Wand nach einem der vorhergehenden Ansprüche, **dadurch gekennzeichnet, dass** sie eine Verkleidung (10) umfasst, welche die Elemente (7, 9) überdeckt und an diesen befestigt ist, um ein Gelenk entlang der nebeneinander liegenden Ränder (11, 13) zu bilden.

6. Wand nach einem der vorhergehenden Ansprüche, **dadurch gekennzeichnet, dass** die Vorsprünge (15) mindestens eines Randes (11, 13) Versetzungen (23) nach unten umfassen.

7. Kraftfahrzeug umfassend eine Wand (5), **dadurch gekennzeichnet, dass** die Wand eine Wand nach einem der vorhergehenden Ansprüche ist.

8. Fahrzeug nach Anspruch 7, **dadurch gekennzeichnet, dass** die Wand (5) teilweise einen Laderaum abgrenzt.

9. Fahrzeug nach Anspruch 8, **dadurch gekennzeichnet, dass** die Wand (5) ein Laderaumboden (7) ist.

10. Fahrzeug nach Anspruch 8 oder 9, **dadurch gekennzeichnet, dass** der Laderaum am hinteren Ende (2) des Kraftfahrzeugs angeordnet ist.

## Claims

1. Wall (5) for a motor vehicle, of the type comprising a first element (7) and a second element (9), the edges (11, 13) of which are adjacent, the second element (9) being articulated with respect to the first element (7) along their adjacent edges in order to be able to move between a lowered position and a raised position,
the adjacent edges (11, 13) having crenellated shapes with successive projections (15, 19) and hollows (17, 21), **characterised in that** the adjacent edges (11, 13) overlap with the projections of an element which passes through the hollows of the other element in order to be disposed under the other element.

2. Wall according to Claim 1, **characterised in that** the elements are produced from plastics material.

3. Wall according to Claim 1 or 2, **characterised in that** the projections (15, 19) are made in one piece with the elements.

4. Wall according to one of the preceding claims, **characterised in that** the elements (7, 9) are panels and **in that** the wall offers a substantially planar top surface (24) when the second panel (9) is in the lowered position.

5. Wall according to one of the preceding claims, **characterised in that** it comprises a cladding (10) covering the elements (7, 9) and fixed to these in order to form an articulation along the adjacent edges (11, 13).

6. Wall according to one of the preceding claims, **characterised in that** the projections (15) on at least one edge (11, 13) comprise downward steps (23).

7. Motor vehicle comprising a wall (5) **characterised in that** the wall is a wall according to one of the preceding claims.

8. Vehicle according to Claim 7, **characterised in that** the wall (5) partly delimits a luggage compartment.

9. Vehicle according to Claim 8, **characterised in that** the wall (5) is a floor of the compartment (7).

10. Vehicle according to Claim 8 or 9, **characterised in that** the luggage compartment is disposed at the rear end (2) of the motor vehicle.
